# EUROPEAN PATENT SPECIFICATION

(11) **EP 4 310 768 B1**
(45) Date of publication and mention of the grant of the patent: **12.06.2024**
(21) Application number: 22185428.4
(22) Date of filing: 18.07.2022
(51) Int. Cl.: G06T 3/4038, G06T 7/00

(54) **DRIVER ASSISTANCE SYSTEM**
FAHRERASSISTENZSYSTEM
SYSTÈME D'ASSISTANCE AU CONDUCTEUR

(43) Date of publication of application: 24.01.2024
(73) Proprietor: Harman International Industries, Incorporated, Stamford, CT 06901 (US)
(72) Inventor: PADKOWSKI, Piotr, Stamford, CT, 06901 (US); KACZANOWSKI, Pawel, Stamford, CT, 06901 (US)
(74) Representative: Westphal, Mussgnug & Partner, Patentanwälte mbB

(56) References cited:
- US-A1- 2019 355 171
- US-A1- 2021 004 614
- BAEK ILJOO ET AL: "Thin-Plate Spline-based Adaptive 3D Surround View", 2019 IEEE INTELLIGENT VEHICLES SYMPOSIUM (IV), IEEE, 9 June 2019 (2019-06-09), pages 586-593, XP033606202, DOI: 10.1109/IVS.2019.8814231 [retrieved on 2019-08-26]

## Description

### TECHNICAL FIELD

The disclosure relates to a driver assistance system, in particular to a surround view system for a vehicle.

### BACKGROUND

Document "Thin-Plate Spline-based Adaptive 3D Surround View" by Baek Oljoo et al., IEEE Intelligent Vehicles Symposium (IV), IEEE (2019-06-09), pages 586-593, discloses a Thin-Plate Spline (TPS) algorithm for creating a 3D surround view of a vehicle with configurable vantage points.

Document US 2021/004614 A1 discloses a surround view system for a vehicle. The surround view system comprises a detection unit and an evaluation unit. The detection unit is designed to detect data relating to the surroundings. The evaluation unit is designed to identify an object in the detected data relating to the surroundings and to determine the 3D shape of this object. The evaluation unit is additionally designed to add the determined 3D shape to a projection surface of the surround view system for the detected data relating to the surroundings such that an adapted projection surface results. The evaluation unit is designed to project the data relating to the surroundings onto the adapted projection surface.

Document US 2019/355171 A1 discloses a surround view system for a vehicle including: a three-dimensional geometry unit configured to receive vehicle surrounding environment data and generate a three-dimensional model of a vehicle surrounding environment based on the received vehicle surrounding environment data; and a view generation unit configured to receive visual data and map the visual data to portions of the three-dimensional model based on the spatial and/or temporal information of the visual data and the vehicle surrounding environment data to form a virtual surround view.

Driver assistance may include any relief that is provided to an individual associated with a vehicle with the aim of increasing individual protection and enhancing driver experience. A camera-based surround view system may help to enhance a driver's awareness of the surroundings of the vehicle. Some advanced driver assistance systems (ADAS) are configured to present to a driver an image of the surroundings of the vehicle (surround view camera systems). This allows to visualize areas outside of the vehicle that would otherwise be hidden from the driver's view by the vehicle or any parts mounted to the vehicle, for example. The driver may be assisted in safely parking their vehicle, for example. One or more cameras are generally mounted to the vehicle that are configured to capture images of the surroundings of the vehicle. The cameras may be mounted at different positions of the vehicle and/or may be oriented in different directions with regard to the vehicle in order to be able to capture images of the surroundings in all directions. Some surround view systems comprise four to six wide-angle (fish eye lens) cameras mounted around the vehicle, for example, each camera facing a different direction. The images captured by the one or more cameras are then stitched together in a suitable way and a virtual view of the vehicle and its surroundings is presented to the driver. That is, a composite view of the surroundings of the vehicle is synthesized and presented to the driver in real-time. An image may be generated that visualizes the vehicle as seen from a virtual camera position. Unfortunately, however, known camera-based surround view systems in some situations do not provide a clear and/or undistorted image visualizing the vehicle.

There is a need for a system and method that allow to provide a very clear image visualizing the vehicle as seen from a virtual camera position for any possible surroundings of the vehicle, wherein the image is as undistorted as possible.

### SUMMARY

The driver assistance systems and related methods according to various embodiments of the present disclosure can be used for a vehicle to facilitate delivery of a clear and substantially undistorted image visualizing the vehicle as seen from a virtual camera position for any possible surroundings of the vehicle. The clear image visualizing the vehicle helps a driver of the vehicle to easily perceive any objects or obstacles surrounding the vehicle. Further, the systems and methods according to the various embodiments of the present disclosure are capable of providing images to a driver of a vehicle from which the driver is able to correctly estimate a distance to such objects or obstacles without being misguided or interfered by unwanted distortions of the displayed image.

The present disclosure provides a driver assistance system according to claim 1.

The present disclosure further provides a computer-implemented method according to claim 11.

Other systems, methods, features and advantages of the present disclosure will be or will become apparent to one with skill in the art upon examination of the following detailed description and figures. It is intended that all such additional systems, methods, features and advantages be included within this description, be within the scope of the invention, which is defined by the following claims.

### BRIEF DESCRIPTION OF THE DRAWINGS

The arrangement may be better understood with reference to the following description and drawings. The components in the figures are not necessarily to scale, emphasis instead being placed upon illustrating the principles of the invention. Moreover, in the figures, like referenced numerals designate corresponding parts throughout the different views.
Figure 1 schematically illustrates a driver assistance system according to an embodiment of the present disclosure.
Figure 2 schematically illustrates a driver assistance system according to another embodiment of the present disclosure.
Figure 3 illustrates a schematic view of an exemplary virtual camera position.
Figure 4 illustrates a schematic view of an exemplary virtual camera position.
Figure 5 schematically illustrates a driver assistance system according to yet another embodiment of the present disclosure.
Figure 6, in a flow diagram, schematically illustrates a method according to an embodiment of the present disclosure.

### DETAILED DESCRIPTION

As required, detailed embodiments of the present invention are disclosed herein; however, it is to be understood that the disclosed embodiments are merely examples of the invention that may be embodied in various and alternative forms. The figures are not necessarily to scale; some features may be exaggerated or minimized to show details of particular components. Therefore, specific structural and functional details disclosed herein are not to be interpreted as limiting, but merely as a representative basis for teaching one skilled in the art to variously employ the present invention.

It is recognized that directional terms that may be noted herein (e.g., "upper", "lower", "inner", "outer", "top", "bottom", etc.) simply refer to the orientation of various components of an arrangement as illustrated in the accompanying figures. Such terms are provided for context and understanding of the disclosed embodiments.

The driver assistance system and related method according to the various embodiments described herein allow to provide a very clear image visualizing the vehicle as seen from a virtual camera position for any possible surroundings of the vehicle, wherein the image is as undistorted as possible. In this way, a driver of the vehicle may easily perceive any objects or obstacles in the surroundings of the vehicle and may correctly estimate any distances to such objects without being misguided by any unwanted distortions of the displayed image.

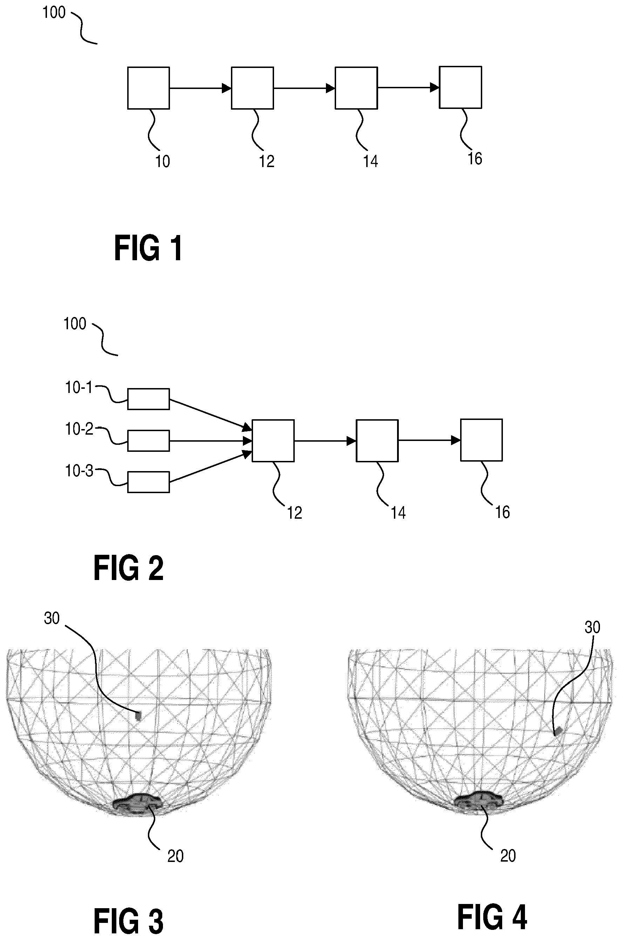

Referring to Figure 1, an exemplary embodiment of a driver assistance system 100 of the present disclosure is schematically illustrated. The driver assistance system 100 includes a data input unit 10, a scene detector unit 12, a mesh selector unit 14, and a rendering unit 16. The data input unit 10 is configured to capture one or more parameters of a surrounding environment of the vehicle. The data input unit 10, as is exemplarily illustrated in Figure 2, may include one or more sub-units 10-1, 10-2, 10-3, for example. A first sub-unit 10-1 may be a camera unit, for example, and a second sub-unit 10-2 may be a sensor unit, for example. The data input unit 10 may include one or more cameras mounted to the vehicle and configured to capture a plurality of images of the surrounding environment of the vehicle. The one or more cameras may comprise four to six wide-angle cameras, for example. In order to provide the illusion of 3D immersion of the vehicle and its surrounding environment, the plurality of images of the surrounding environment of the vehicle are blended (stitched) together on a 3D mesh. The data input unit 10 may be configured to determine one or more parameters of the surrounding environment of the vehicle by means of cameras and/or any other kind of sensors such as, e.g., velocity sensors, location sensors (e.g., GPS sensors), radar sensors, LIDAR sensors, etc. The one or more parameters of the surrounding environment of the vehicle are provided to the scene detector unit 12 which, based on the one or more parameters, determines a type of surroundings that the vehicle is located in.

It may be determined, for example, whether the vehicle is driving inside or outside of a town or city (whether or not there are buildings, walls or other obstacles in the immediate surroundings of the vehicle), whether the vehicle is driving inside a tunnel or inside a building such as a parking garage, whether the vehicle is driving in heavy traffic with a plurality of other vehicles in the immediate surroundings of the vehicle, whether the vehicle is driving in a (narrow) parking area, etc. Parameters that may help to characterize the type of surroundings that the vehicle is located in may also be acquired by the data input unit 10 in any other suitable way. For example, a third sub-unit 10-3 may be a navigation system. If the position of the vehicle is known, specific parameters of the surrounding environment may be stored in the navigation system for any possible location of the vehicle on a map.

The one or more parameters of the surrounding environment of the vehicle, therefore, may relate to the presence of one or more objects or obstacles in the surrounding environment of the vehicle, a distance to one or more objects or obstacles in the surrounding environment of the vehicle, a size of one or more objects or obstacles in the surrounding environment of the vehicle, a height of a space the vehicle is currently located in, or any other parameters that are suitable to determine the type of surroundings that the vehicle is located in. It is also possible to consider traffic conditions or a time of day, for example. Most navigation systems receive real-time traffic information, for example. Based on a current location of the vehicle, such traffic information may be used in order to determine whether there are many or only few other vehicles in the surrounding environment of the vehicle, for example. Based on a time of day it may also be estimated whether there is usually heavy traffic (many vehicles) or low traffic (few vehicles) at a certain location. A velocity of the vehicle may also be considered in addition to other parameters, for example.

Data related to the type of surroundings that the vehicle is located in and identified by the scene detector unit 12 is provided to the mesh selector unit 14 which, based on the identified type of surroundings, selects one of a plurality of meshes to be used for creating a surround view image. A plurality (at least two) different kinds of meshes are stored in the mesh selector unit 14, wherein each mesh corresponds to (is related to) one or more types of surroundings identifiable by the scene detector unit 12. Each of the plurality of meshes stored by the mesh selector unit 12 is suitable for one or more certain types of surroundings. For example, a bowl-shaped mesh, is usually very well suited for situations where the vehicle is driving in a comparably open area (e.g., on a multi-way highway with only few other vehicles in the surroundings of the vehicle, on a country road, on a large open parking area with none or only few other vehicles around, etc.). A bowl-shaped environment is schematically illustrated in Figures 3 and 4. In Figure 3, the vehicle 20 is located at the bottom of a bowl-shaped virtual environment, with a virtual camera position 30 (location and/or direction from where a virtual camera views the vehicle 20) directly above the vehicle 20 at the center of the bowl-shaped environment. The virtual camera position 30, however, may be different or may even change as the vehicle moves. As is illustrated in Figure 4, it is also possible that the virtual camera position 30 is arranged anywhere on the surface of the bowl, for example. The mesh that is used for the projection may be a bowl-shaped mesh, for example.

The same bowl-shaped mesh, however, may result in distorted and very unsatisfactory images in situations where the vehicle is located in a very narrow space (e.g., if the vehicle is situated in a narrow parking garage with walls or other vehicles close to the vehicle, in a tunnel, in a narrow road, etc.). Some types of meshes are suitable for a plurality of different driving situations. Generally, however, for a certain type of mesh there will always be at least a few driving situations for which the type of mesh is not optimal, resulting in an unsatisfactory 3D image that is presented to the driver. Therefore, the driver assistance system according to the present disclosure uses a different type of mesh to generate a surround view image for different types of surroundings. If the vehicle is located in a comparably narrow environment, a cuboid-shaped mesh may be used instead of a bowl-shaped mesh, for example. Other types of meshes that may be suitable for one or more specific types of surroundings may include icosphere-shaped meshes, cylinder-shaped meshes, or cone-shaped meshes, for example. Any other regular or irregular formed mesh may also be used. It is also possible to use a combined mesh that combines at least two of a bowl-shaped mesh, a cuboid-shaped mesh, an icosphere-shaped mesh, a cylinder-shaped mesh, and a cone-shaped mesh such as, e.g., a bowl-shaped mesh of which one or more sides are flattened (combination of bow-shaped and cuboid-shaped mesh). The mesh selector unit 14 may use a lookup table, for example, in order to select the optimal mesh for a certain type of surroundings identified by the scene detector unit 12. Once the optimal type of mesh that is suited best for the type of surroundings that the vehicle 20 is located in has been selected by the mesh selector unit 14 and data related to the selected mesh has been provided to the rendering unit 16, the rendering unit 16 generates a 3D surround view of the vehicle by stitching together the plurality of images captured by the plurality of cameras using the mesh selected by the mesh selector unit 14.

By selecting a suitable mesh for each type of surroundings in which the driver assistance system 100 is used, a satisfactory 3D surround view image may be provided to the driver of the vehicle for every possible surrounding environment without excessive computing efforts. That is, a satisfying surround view image is provided to the driver for any type of surroundings in real-time, thereby enhancing driver safety. If the optimal type of mesh is used for every possible type of surroundings, distortions in the resulting surround view image can be minimized. That is, any objects or obstacles in the surrounding environment of the vehicle are clearly visible, and their positions and dimensions are clearly recognizable for the driver. The 3D surround view of the vehicle generated by the rendering unit 16 may be displayed on a display of the vehicle, for example.

The selected mesh, optionally, may be parameterized before generating a 3D surround view of the vehicle. For any two surfaces having a similar topology, a bijective mapping exists between them. If one of the surfaces is a mesh, the problem of computing such a mapping is referred to as mesh parameterization. The surface that the mesh is mapped to is typically called the parameter domain. The surface that the mesh is mapped to may be the image of the surrounding environment of the vehicle. For example, a width of the selected mesh (e.g., cuboid-shaped mesh) may be adapted based on one or more parameters of the surrounding environment of the vehicle. According to one embodiment of the present disclosure, one or more sensors may provide the one or more parameters of the surrounding environment of the vehicle. The one or more sensors may include an ultrasonic distance sensor, for example. Any other kind of sensors may be used in order to determine the one or more parameters of the surrounding environment of the vehicle. The one or more parameters of the surrounding environment of the vehicle may include a distance between the vehicle and one or more objects or obstacles in the surrounding environment of the vehicle. The width of the selected mesh may be adapted depending on the distance between the vehicle and one or more objects or obstacles in the surrounding environment of the vehicle, for example. Any other parameters of the selected mesh may be adapted as well during the parameterization process.

According to one embodiment of the present disclosure, the following types of surroundings (driving situations) may be possible:
1) vehicle located outside with no or only few obstacles in the immediate surrounding environment;
2) vehicle located in a tunnel;
3) vehicle located outside with a large obstacle (e.g., a wall) to the left and/or right; and
4) vehicle located in a narrow parking space.

Many other additional or alternative types of surroundings can be defined and can be identified by the scene detector unit 12. One type of mesh may be associated with only one or with different ones of the plurality of types of surroundings. For example, the same type of mesh may be used to render the surround view image if the vehicle is driving in a tunnel, if the vehicle is driving in a narrow street, and if the vehicle is located in a narrow parking area.

According to one embodiment of the present disclosure, the driver assistance system may comprise one or more additional sub-units. The one or more additional sub-units may include, e.g., a lens distortion correction unit, a color correction unit, etc. The images captured by the one or more cameras may pass through one or more of the additional sub-units (one or more transformation processes may be performed) before blending together the individual images and projecting them on the selected mesh. Blending and projection, however, can also be performed in the same step simultaneously (e.g., in GPU based shader programs).

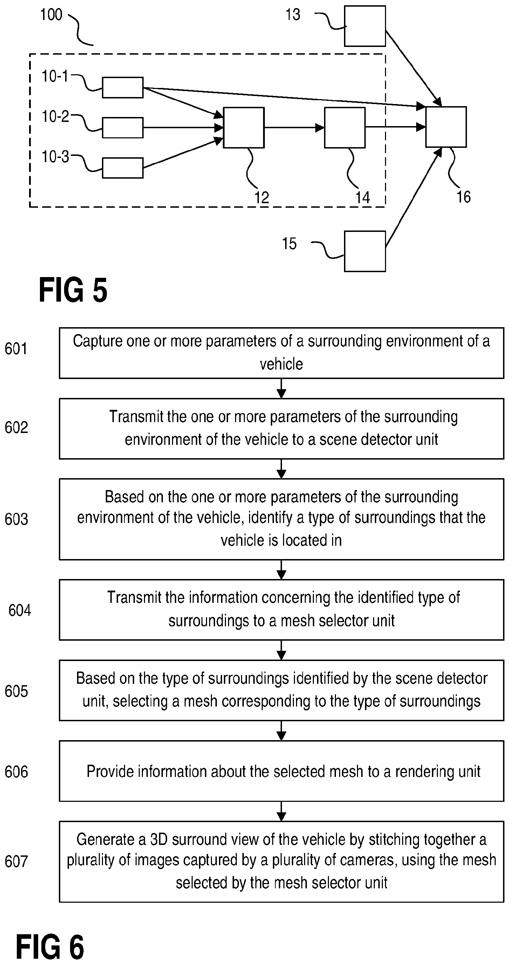

Now referring to Figure 5, it is possible that the same camera(s) and the same images are used to determine the one or more parameters of the surrounding environment and to render the surround view image. That is, the images captured by the one or more cameras of the driver assistance system 100 may be analyzed by the data input unit 10 in order to determine one or more parameters of the surrounding environment. The same images may be stitched together by the rendering unit 16, using the selected mesh, to generate the surround view image. This is indicated by the respective arrows in Figure 5. In the embodiment of the present disclosure illustrated in Figure 5, the driver assistance system 100 further includes an additional mesh unit 13, and a camera and view manager unit 15. The additional mesh unit 13 may provide a vehicle mesh or a mesh of another object in the surrounding environment of the vehicle to the rendering unit 16. The vehicle mesh provides information about a specific shape of the vehicle, which may also be taken into account when generating the final surround view image. The camera and view manager unit 15 may provide one or more view and virtual camera settings to the rendering unit 16. The rendering unit 16 may take into account these view and virtual camera settings when rendering the surround view image.

Now referring to Figure 6, an exemplary embodiment of a method of the present disclosure is illustrated in a flow diagram. The method includes capturing one or more parameters of a surrounding environment of a vehicle by means of a data input unit 10 of a driver assistance system 100 (step 601), and transmitting the one or more parameters of the surrounding environment of the vehicle to a scene detector unit 12 of the driver assistance system 100 (step 602). The method further includes, based on the one or more parameters of the surrounding environment of the vehicle, determining by means of the scene detector unit 12 a type of surroundings that the vehicle is located in (step 603), and transmitting data relating to the identified type of surroundings to a mesh selector unit 14 of the driver assistance system 100 (step 604). The method further includes, based on the type of surroundings identified by the scene detector unit 12, selecting a mesh that corresponds to the identified type of surroundings by means of the mesh selector unit 14 (step 605), and providing data relating to the mesh selected by the mesh selector unit 14 to a rendering unit 16 of the driver assistance system 100 (step 606), wherein the mesh selector unit 14 is configured to store a plurality of meshes, wherein each mesh corresponds to (is related to) one or more types of surroundings identifiable by the scene detector unit 12. The method further includes generating a 3D surround view of the vehicle by stitching together a plurality of images captured by a plurality of cameras of the driver assistance system 100 by means of the rendering unit 16, using the mesh selected by the mesh selector unit 14 (step 607).

While illustrative embodiments of the present disclosure have been described and illustrated above, it should be understood that these are exemplary of the disclosure and are not to be considered as limiting. Additions, deletions, substitutions, and other modifications can be made without departing from the scope of the invention, which is defined in the following claims.

Accordingly, the present disclosure is not to be considered as limited by the foregoing description.

## Claims

1. A driver assistance system (100) for a vehicle comprises:
a plurality of cameras mounted to the vehicle and configured to capture a plurality of images of a surrounding environment of the vehicle;
a data input unit (10) comprising a navigation system, wherein specific parameters of the surrounding environment are stored in the navigation system for any possible location of the vehicle on a map;
a scene detector unit (12);
a mesh selector unit (14); and
a rendering unit (16), wherein
the data input unit (10) is configured to capture one or more parameters of the surrounding environment of the vehicle by means of any sensor, to acquire one or more parameters of the surrounding environment of the vehicle based on a current location of the vehicle, on the specific parameters of the surrounding environment stored in the navigation system for the current location, and on real-time traffic information received by means of the navigation system, and to transmit the one or more parameters of the surrounding environment of the vehicle to the scene detector unit (12),
the scene detector unit (12), based on the parameters of the surrounding environment of the vehicle, is configured to identify a type of surroundings that the vehicle is located in, and to transmit data related to the identified type of surroundings to the mesh selector unit (14),
the mesh selector unit (14) is configured to store a plurality of meshes, wherein each mesh corresponds to one or more types of surroundings identifiable by the scene detector unit (12), and wherein the mesh selector unit (14), based on the type of surroundings identified by the scene detector unit (12), is further configured to select a mesh that corresponds to the identified type of surroundings and provide data related to the selected mesh to the rendering unit (16), and
the rendering unit (16) is configured to generate a 3D surround view of the vehicle by stitching together the plurality of images captured by the plurality of cameras using the mesh selected by the mesh selector unit (14).

2. The driver assistance system (100) of claim 1, wherein the data input unit (10) comprises a camera unit (10-1) configured to capture one or more images of the surrounding environment of the vehicle.

3. The driver assistance system (100) of claim 1 or 2, wherein the data input unit (10) comprises a sensor unit (10-2) comprising one or more of a velocity sensor, a location sensors, a radar sensor, and a LIDAR sensor.

4. The driver assistance system (100) of any of claims 1 to 3, wherein the one or more parameters of the surrounding environment of the vehicle relate to at least one of the presence of one or more objects or obstacles in the surrounding environment of the vehicle, a distance to one or more objects or obstacles in the surrounding environment of the vehicle, a size of one or more objects or obstacles in the surrounding environment of the vehicle, a height of a space the vehicle is currently located in, traffic conditions, and a time of day.

5. The driver assistance system (100) of any of claims 1 to 4, wherein the plurality of meshes stored in the mesh selector unit (14) comprises at least one of a bowl-shaped mesh, a cuboid-shaped mesh, an icosphere-shaped mesh, a cylinder-shaped mesh, a cone-shaped mesh, and a combined mesh.

6. The driver assistance system (100) of claim 5, wherein the combined mesh combines at least two of a bowl-shaped mesh, a cuboid-shaped mesh, an icosphere-shaped mesh, a cylinder-shaped mesh, and a cone-shaped mesh.

7. The driver assistance system (100) of any of the preceding claims, wherein the plurality of cameras comprises four to six wide-angle cameras.

8. The driver assistance system (100) of any of the preceding claims, configured to present the 3D surround view of the vehicle generated by the rendering unit (16) on a display of the vehicle.

9. The driver assistance system (100) of any of the preceding claims, wherein the 3D surround view of the vehicle is an image visualizing the vehicle as seen from a virtual camera position.

10. The driver assistance system (100) of any of the preceding claims, further comprising a lens distortion correction unit, and a color correction unit.

11. A method comprises
capturing one or more parameters of a surrounding environment of a vehicle by means of any sensor of a data input unit (10) of a driver assistance system (100), acquiring one or more parameters of the surrounding environment of the vehicle based on a current location of the vehicle, on specific parameters of the surrounding environment stored in a navigation system of the data input unit (10) for the current location, and on real-time traffic information received by means of the navigation system, and transmitting the one or more parameters of the surrounding environment of the vehicle to a scene detector unit (12) of the driver assistance system (100);
based on the parameters of the surrounding environment of the vehicle, identifying by means of the scene detector unit (12) a type of surroundings that the vehicle is located in, and transmitting data related to the identified type of surroundings to a mesh selector unit (14) of the driver assistance system (100),
based on the type of surroundings identified by the scene detector unit (12), selecting a mesh corresponding to the identified type of surroundings by means of the mesh selector unit (14), and providing data related to the selected mesh to a rendering unit (16) of the driver assistance system (100), wherein the mesh selector unit (14) is configured to store a plurality of meshes, wherein each mesh corresponds to one or more types of surroundings identifiable by the scene detector unit (12), and
generating a 3D surround view of the vehicle by stitching together a plurality of images captured by a plurality of cameras of the driver assistance system (100) mounted to the vehicle by means of the rendering unit (16), using the mesh selected by the mesh selector unit (14).

12. The method of claim 11, wherein capturing one or more parameters of a surrounding environment of the vehicle comprises determining at least one of the presence of one or more objects or obstacles in the surrounding environment of the vehicle, a distance to one or more objects or obstacles in the surrounding environment of the vehicle, a size of one or more objects or obstacles in the surrounding environment of the vehicle, a height of a space the vehicle is currently located in, traffic conditions, and a time of day.

13. The method of claim 11 or 12, further comprising
presenting the 3D surround view of the vehicle generated by the rendering unit (16) on a display of the vehicle.

14. The method of any of claims 11 to 13, wherein generating a 3D surround view of the vehicle comprises generating an image visualizing the vehicle as seen from a virtual camera position.

## Patentansprüche

1. Fahrerassistenzsystem (100) für ein Fahrzeug, umfassend:
eine Vielzahl von Kameras, die am Fahrzeug montiert und dazu konfiguriert ist, eine Vielzahl von Bildern einer Umgebung des Fahrzeugs zu erfassen;
eine Dateneingabeeinheit (10), die ein Navigationssystem umfasst, wobei für jeden möglichen Standort des Fahrzeugs auf einer Karte spezifische Parameter der Umgebung im Navigationssystem gespeichert sind;
eine Szenendetektoreinheit (12);
eine Mesh-Auswahleinheit (14); und
eine Rendering-Einheit (16), wobei
die Dateneingabeeinheit (10) dazu konfiguriert ist, durch einen beliebigen Sensor einen oder mehrere Parameter der Umgebung des Fahrzeugs zu erfassen, basierend auf einem aktuellen Standort des Fahrzeugs, auf den im Navigationssystem für den aktuellen Standort gespeicherten spezifischen Parametern der Umgebung und auf durch das Navigationssystem empfangenen Echtzeit-Verkehrsinformationen einen oder mehrere Parameter der Umgebung des Fahrzeugs zu erlangen, und den einen oder die mehreren Parameter der Umgebung des Fahrzeugs an die Szenendetektoreinheit (12) zu übertragen,
die Szenendetektoreinheit (12) dazu konfiguriert ist, basierend auf den Parametern der Umgebung des Fahrzeugs eine Art von Umgebung zu identifizieren, in der sich das Fahrzeug befindet, und Daten, welche die identifizierte Art von Umgebung betreffen, an die Mesh-Auswahleinheit (14) zu übertragen,
die Mesh-Auswahleinheit (14) so konfiguriert ist, dass sie eine Vielzahl von Meshes speichert, wobei jedes Mesh einer oder mehreren Arten von Umgebungen entspricht, die von der Szenendetektoreinheit (12) identifizierbar sind, und wobei die Mesh-Auswahleinheit (14) basierend auf der Art der Umgebung, die von der Szenendetektoreinheit (12) identifiziert wird, ferner so konfiguriert ist, dass sie ein Mesh auswählt, das der identifizierten Art der Umgebung entspricht, und der Rendering-Einheit (16) Daten bereitstellt, die das ausgewählte Mesh betreffen, und
die Rendering-Einheit (16) dazu konfiguriert ist, eine 3D-Rundumansicht des Fahrzeugs zu generieren, indem sie die Vielzahl von Bildern, die von der Vielzahl von Kameras erfasst wurde, unter Verwendung des von der Mesh-Auswahleinheit (14) ausgewählten Meshes zusammenfügt.

2. Fahrerassistenzsystem (100) nach Anspruch 1, wobei die Dateneingabeeinheit (10) eine Kameraeinheit (10-1) umfasst, die dazu konfiguriert ist, ein oder mehrere Bilder der Umgebung des Fahrzeugs zu erfassen.

3. Fahrerassistenzsystem (100) nach Anspruch 1 oder 2, wobei die Dateneingabeeinheit (10) eine Sensoreinheit (10-2) umfasst, die einen oder mehrere von einem Geschwindigkeitssensor, einem Standortsensor, einem Radarsensor und einem LIDAR-Sensor umfasst.

4. Fahrerassistenzsystem (100) nach einem der Ansprüche 1 bis 3, wobei der eine oder die mehreren Parameter der Umgebung des Fahrzeugs mindestens eines von dem Vorhandensein eines oder mehrerer Objekte oder Hindernisse in der Umgebung des Fahrzeugs, einem Abstand zu einem oder mehreren Objekten oder Hindernissen in der Umgebung des Fahrzeugs, einer Größe eines oder mehrerer Objekte oder Hindernisse in der Umgebung des Fahrzeugs, einer Höhe eines Raums, in dem sich das Fahrzeug aktuell befindet, Verkehrsbedingungen und einer Tageszeit betrifft bzw. betreffen.

5. Fahrerassistenzsystem (100) nach einem der Ansprüche 1 bis 4, wobei die Vielzahl der in der Mesh-Auswahleinheit (14) gespeicherten Meshes mindestens eines von einem schüsselförmigen Mesh, einem quaderförmigen Mesh, einem ikosphärischen Mesh, einem zylinderförmigen Mesh, einem kegelförmigen Mesh und einem kombinierten Mesh umfasst.

6. Fahrerassistenzsystem (100) nach Anspruch 5, wobei das kombinierte Mesh mindestens zwei von einem schüsselförmigen Mesh, einem quaderförmigen Mesh, einem ikosphärischen Mesh, einem zylinderförmigen Mesh und einem kegelförmigen Mesh kombiniert.

7. Fahrerassistenzsystem (100) nach einem der vorhergehenden Ansprüche, wobei die Vielzahl von Kameras vier bis sechs Weitwinkelkameras umfasst.

8. Fahrerassistenzsystem (100) nach einem der vorhergehenden Ansprüche, das dazu konfiguriert ist, die von der Rendering-Einheit (16) generierte 3D-Rundumansicht des Fahrzeugs auf einem Display des Fahrzeugs darzustellen.

9. Fahrerassistenzsystem (100) nach einem der vorhergehenden Ansprüche, wobei die 3D-Rundumsicht des Fahrzeugs ein Bild ist, welches das Fahrzeug aus der Sicht einer virtuellen Kamera visualisiert.

10. Fahrerassistenzsystem (100) nach einem der vorhergehenden Ansprüche, ferner umfassend eine Einheit zur Korrektur der Linsenverzerrung und eine Farbkorrektureinheit.

11. Verfahren, umfassend Erfassen von einem oder mehreren Parametern einer Umgebung eines Fahrzeugs durch einen beliebigen Sensor einer Dateneingabeeinheit (10) eines Fahrerassistenzsystems (100), Erlangen von einem oder mehreren Parametern der Umgebung des Fahrzeugs basierend auf einem aktuellen Standort des Fahrzeugs, auf spezifischen Parametern der Umgebung, die in einem Navigationssystem der Dateneingabeeinheit (10) für den aktuellen Standort gespeichert sind, und auf Echtzeit-Verkehrsinformationen, die durch das Navigationssystem empfangen werden, und Übertragen des einen oder der mehreren Parameter der Umgebung des Fahrzeugs an eine Szenendetektoreinheit (12) des Fahrerassistenzsystems (100);
Identifizieren einer Art von Umgebung, in der sich das Fahrzeug befindet, durch die Szenendetektoreinheit (12) basierend auf den Parametern der Umgebung des Fahrzeugs, und Übertragen von Daten, welche die identifizierte Art von Umgebung betreffen, an eine Mesh-Auswahleinheit (14) des Fahrerassistenzsystems (100),
Auswählen eines Meshes, das der identifizierten Art von Umgebung entspricht, durch die Mesh-Auswahleinheit (14) basierend auf der Art der Umgebungen, die von der Szenendetektoreinheit (12) identifiziert wurde, und Bereitstellen der Daten, die das ausgewählte Mesh betreffen, an eine Rendering-Einheit (16) des Fahrerassistenzsystems (100), wobei die Mesh-Auswahleinheit (14) dazu konfiguriert ist, eine Vielzahl von Meshes zu speichern, wobei jedes Mesh einer oder mehreren Arten von Umgebungen entspricht, die durch die Szenendetektoreinheit (12) identifizierbar sind, und
Generieren einer 3D-Rundumansicht des Fahrzeugs durch Zusammenfügen einer Vielzahl von Bildern, die von einer Vielzahl von Kameras des am Fahrzeug montierten Fahrerassistenzsystems (100) erfasst wurde, durch die Rendering-Einheit (16) unter Verwendung des von der Mesh-Auswahleinheit (14) ausgewählten Meshes.

12. Verfahren nach Anspruch 11, wobei Erfassen von einem oder mehreren Parametern einer Umgebung des Fahrzeugs Bestimmen von mindestens einem von dem Vorhandensein eines oder mehrerer Objekte oder Hindernisse in der Umgebung des Fahrzeugs, einem Abstand zu einem oder mehreren Objekten oder Hindernissen in der Umgebung des Fahrzeugs, einer Größe eines oder mehrerer Objekte oder Hindernisse in der Umgebung des Fahrzeugs, einer Höhe eines Raums, in dem sich das Fahrzeug aktuell befindet, Verkehrsbedingungen und einer Tageszeit umfasst.

13. Verfahren nach Anspruch 11 oder 12, ferner umfassend:
Darstellen der von der Rendering-Einheit (16) generierten 3D-Rundumansicht des Fahrzeugs auf einem Display des Fahrzeugs.

14. Verfahren nach einem der Ansprüche 11 bis 13, wobei Generieren einer 3D-Rundumansicht des Fahrzeugs Generieren eines Bildes umfasst, welches das Fahrzeug aus der Sicht einer virtuellen Kamera visualisiert.

## Revendications

1. Système d'assistance au conducteur (100) pour un véhicule comprenant :
une pluralité de caméras montées sur le véhicule et configurées pour capturer une pluralité d'images d'un environnement immédiat du véhicule ;
une unité d'entrée de données (10) comprenant un système de navigation, dans lequel les paramètres spécifiques de l'environnement immédiat sont stockés dans le système de navigation pour un quelconque emplacement possible du véhicule sur une carte ;
une unité de détection de scène (12) ;
une unité de sélection de maillage (14) ; et
une unité de rendu (16), dans lequel
l'unité d'entrée de données (10) est configurée pour capturer un ou plusieurs paramètres de l'environnement immédiat du véhicule au moyen d'un quelconque capteur, pour acquérir un ou plusieurs paramètres de l'environnement immédiat du véhicule sur la base d'un emplacement actuel du véhicule, des paramètres spécifiques de l'environnement immédiat stockés dans le système de navigation pour l'emplacement actuel, et des informations de trafic en temps réel reçues au moyen du système de navigation, et pour transmettre les un ou plusieurs paramètres de l'environnement immédiat du véhicule à l'unité de détection de scène (12),
l'unité de détection de scène (12), sur la base des paramètres de l'environnement immédiat du véhicule, est configurée pour identifier un type d'environnement dans lequel se trouve le véhicule, et pour transmettre des données relatives au type d'environnement identifié à l'unité de sélection de maillage (14),
l'unité de sélection de maillage (14) est configurée pour stocker une pluralité de maillages, dans lequel chaque maillage correspondant à un ou plusieurs types d'environnement identifiables par l'unité de détection de scène (12), et dans lequel l'unité de sélection de maillage (14), sur la base du type d'environnement identifié par l'unité de détection de scène (12), est en outre configuré pour sélectionner un maillage qui correspond au type d'environnement identifié et fournir des données relatives au maillage sélectionné à l'unité de rendu (16), et
l'unité de rendu (16) est configurée pour générer une vue panoramique 3D du véhicule en assemblant la pluralité d'images capturées par la pluralité de caméras à l'aide du maillage sélectionné par l'unité de sélection de maillage (14).

2. Système d'assistance au conducteur (100) selon la revendication 1, dans lequel l'unité d'entrée de données (10) comprend une unité de caméra (10-1) configurée pour capturer une ou plusieurs images de l'environnement immédiat du véhicule.

3. Système d'assistance au conducteur (100) selon la revendication 1 ou 2, dans lequel l'unité d'entrée de données (10) comprend une unité de capteur (10-2) comprenant un ou plusieurs parmi un capteur de vitesse, un capteur de localisation, un capteur radar et un capteur LIDAR.

4. Système d'assistance au conducteur (100) selon l'une quelconque des revendications 1 à 3, dans lequel les un ou plusieurs paramètres de l'environnement immédiat du véhicule concernent au moins l'une de la présence d'un ou de plusieurs objets ou obstacles dans l'environnement immédiat du véhicule, d'une distance par rapport à un ou plusieurs objets ou obstacles dans l'environnement immédiat du véhicule, d'une taille d'un ou de plusieurs objets ou obstacles dans l'environnement immédiat du véhicule, d'une hauteur d'un espace dans lequel le véhicule se trouve actuellement, des conditions de trafic, et à une heure de la journée.

5. Système d'assistance au conducteur (100) selon l'une quelconque des revendications 1 à 4, dans lequel la pluralité de maillages stockés dans l'unité de sélection de maillage (14) comprend au moins l'un d'un maillage en forme de bol, d'un maillage en forme de cuboïde, d'un maillage en forme d'icosphère, d'un maillage en forme de cylindre, d'un maillage en forme de cône et d'un maillage combiné.

6. Système d'assistance au conducteur (100) selon la revendication 5, dans lequel le maillage combiné combine au moins deux parmi un maillage en forme de bol, un maillage en forme de cuboïde, un maillage en forme d'icosphère, un maillage en forme de cylindre et un maillage en forme de cône.

7. Système d'assistance au conducteur (100) selon l'une quelconque des revendications précédentes, dans lequel la pluralité de caméras comprend quatre à six caméras grand angle.

8. Système d'assistance au conducteur (100) selon l'une quelconque des revendications précédentes, configuré pour présenter la vue panoramique 3D du véhicule générée par l'unité de rendu (16) sur un écran du véhicule.

9. Système d'assistance au conducteur (100) selon l'une quelconque des revendications précédentes, dans lequel la vue panoramique 3D du véhicule est une image visualisant le véhicule vu depuis une position de caméra virtuelle.

10. Système d'assistance au conducteur (100) selon l'une quelconque des revendications précédentes, comprenant également une unité de correction de distorsion de lentille et une unité de correction de couleur.

11. Procédé comprenant la capture d'un ou de plusieurs paramètres d'un environnement immédiat d'un véhicule au moyen d'un quelconque capteur d'une unité d'entrée de données (10) d'un système d'assistance au conducteur (100), l'acquisition d'un ou de plusieurs paramètres de l'environnement immédiat du véhicule sur la base d'un emplacement actuel du véhicule, des paramètres spécifiques de l'environnement immédiat stockés dans un système de navigation de l'unité d'entrée de données (10) pour l'emplacement actuel, et des informations de trafic en temps réel reçues au moyen du système de navigation, et la transmission des un ou plusieurs paramètres de l'environnement immédiat du véhicule à une unité de détection de scène (12) du système d'assistance au conducteur (100) ;
sur la base des paramètres de l'environnement immédiat du véhicule, l'identification au moyen de l'unité de détection de scène (12) d'un type d'environnement dans lequel se trouve le véhicule, et la transmission des données relatives au type d'environnement identifié à une unité de sélection de maillage (14) du système d'assistance au conducteur (100),
sur la base du type d'environnement identifié par l'unité de détection de scène (12), la sélection d'un maillage correspondant au type d'environnement identifié au moyen de l'unité de sélection de maillage (14), et la fourniture des données relatives au maillage sélectionné à une unité de rendu (16) du système d'assistance au conducteur (100), dans lequel l'unité de sélection de maillage (14) est configurée pour stocker une pluralité de maillages, dans lequel chaque maillage correspond à un ou plusieurs types d'environnements identifiables par l'unité de détection de scène (12), et
la génération d'une vue panoramique 3D du véhicule en assemblant une pluralité d'images capturées par une pluralité de caméras du système d'assistance au conducteur (100) montées sur le véhicule au moyen de l'unité de rendu (16), à l'aide du maillage sélectionné par l'unité de sélection de maillage (14).

12. Procédé selon la revendication 11, dans lequel la capture d'un ou de plusieurs paramètres de l'environnement immédiat du véhicule comprend la détermination d'au moins l'une de la présence d'un ou de plusieurs objets ou obstacles dans l'environnement immédiat du véhicule, d'une distance par rapport à un ou plusieurs objets ou obstacles dans l'environnement immédiat du véhicule, d'une taille d'un ou de plusieurs objets ou obstacles dans l'environnement immédiat du véhicule, d'une hauteur d'un espace dans lequel le véhicule se trouve actuellement, des conditions de trafic, et à une heure de la journée.

13. Procédé selon la revendication 11 ou 12, comprenant également la présentation de la vue panoramique 3D du véhicule générée par l'unité de rendu (16) sur un écran du véhicule.

14. Procédé selon l'une quelconque des revendications 11 à 13, dans lequel la génération d'une vue périphérique 3D du véhicule comprend la génération d'une image visualisant le véhicule vu depuis une position de caméra virtuelle.
